# EUROPEAN PATENT APPLICATION

(11) **EP 4 847 315 A1**
(43) Date of publication of application: **02.12.2026**
(21) Application number: 25382531.9
(22) Date of filing: 27.05.2025
(51) Int. Cl.: B60Q 1/00, B29C 65/16, B60R 13/00, F21S 43/14, F21S 43/20, F21S 43/27, F21S 43/33, F21S 45/47

(54) **VEHICLE COMPONENT**

(71) Applicant: Ficosa Automotive, S.L.U., 08232 Viladecavalls, Barcelona (ES)
(72) Inventor: RUIZ ORTEGA, Nestor, 08032 VILADECAVALLS (ES); CARNERO SAGARRA, Pau, 08232 VILADECAVALLS (ES); ALCALÁ BLANCO, Carlos, 08232 VILADECAVALLS (ES)
(74) Representative: ZBM Patents - Zea, Barlocci & Markvardsen

(57) **Abstract**

The vehicle component comprises a housing (200) for receiving a printed circuit board assembly (310) and an optical element (400) comprising an outer layer facing away from a vehicle exterior and laser welded to a housing side wall edge (225), an inner diffusive layer (420), and an intermediate layer (430) therebetween. An interface (250), inclined towards the optical element (400), is defined between said edge (225) of the side wall (220) and an optical element outer layer edge (415). A housing base (210) is made from a thermally conductive material, and a housing side wall (220) is made from a plastic material. At least a portion of an interior surface (226) of the housing side wall (220) may include a reflective surface.

## Description

### Technical field

The present disclosure relates to a vehicle component that includes an electrical element such as a lighting, signaling, sensor element, etc.

The present vehicle component is particularly, but not exclusively, intended to be mounted to any visible area of a motor vehicle part such as, for example, a vehicle hood, trunk, panel, front grille, or rear grille.

### BACKGROUND

Vehicle components, such as logos, symbols, badges, emblems, etc. are currently increasingly popular in the automotive field.

Said vehicle components may be illuminated components. They are typically used to highlight a brand's identity or a vehicle's special edition. Illuminated components are often placed on a vehicle front grille, rear grille, or other vehicle prominent locations. Illumination is achieved through the use of light sources such as LEDs, making the brand emblem stand out in the dark, or in any other condition. From an aesthetic point of view, illuminated components add a touch of sophistication to the vehicle's design.

Other purposes of known illuminated vehicle components are door sills installed at the base of the vehicle doors, side mirrors to enhance the vehicle appearance and to improve safety making the mirrors more visible in dark environments, illuminated grille and front or rear panels capable of changing colors or patterns, and puddle lights used for illuminating the ground near the vehicle.

While the primary purpose of exterior logos, brands, and badges is purely aesthetic, many modern vehicles have begun to incorporate functional elements. For this purpose, electrical components such as, for example, sensors, are required to be included. The integration of sensors is being more and more prevalent due to current advancements in sensor technology for safety purposes and autonomous driving.

Examples of functional elements that may be present in vehicle components are proximity sensors including ultrasonic sensors or radar-based sensors often located in the front and rear bumpers for parking assistance, collision prevention, and proximity alerts. Radar sensors may be also included in advanced driver-assistance systems (ADAS) such as for adaptive cruise control, collision warning, and automatic emergency braking for detecting objects or obstacles in front of the vehicle, even in low-visibility conditions.

Further examples of functional elements are cameras, such as surround view, parking, and lane keeping assist cameras, that can be mounted to several parts of the vehicle to provide visual feeds. Still further examples of functional elements are LIDAR (Light Detection and Ranging) devices often mounted on the roof or at the front of the vehicle. They are used in some advanced autonomous vehicles for mapping the environment in high resolution.

Vehicle components may also include infrared sensors for detecting pedestrians, animals, or other objects in low-light conditions, light sensors to measure ambient light levels around the vehicle and automatically adjust the headlights based on the environment, rain sensors to detect the presence of rain on the windshield and automatically activate the wipers, windshield wiper sensors including optical or capacitive sensors to detect the level of dirt or debris on the windshield and adjust wiper speed or activate an additional cleaning cycle, etc.

Finally, Vehicle-to-Everything (V2X) Communication may be also part of the present vehicle components. V2X allows communication to be established between vehicles and their surroundings so that information from sensors, cameras and internal systems can be shared with other vehicles, nearby pedestrians, road infrastructure, and Smart City systems using wireless data connectivity.

The above components, whether they are of the aesthetic or functional type, thus contribute to the vehicle aesthetics and also to the safety, convenience, and functionality of the vehicle.

However, said vehicle components add new challenges in the design of modern motor vehicles which have not yet been fully addressed.

For example, in the case of illuminated vehicle components, although the light source is increasingly relied on LEDs, a problem arises concerning heat dissipation.

Managing the heat that is generated by the light source is essential for ensuring longevity, consistent performance, and preventing damage to surrounding components. However, that problem has so far not been solved at all, so an optimized design is still required. The problem of heat dissipation also applies to functional components including sensors and other devices that generate heat during use.

A further challenge derived from the above-mentioned vehicle components which have not yet been fully addressed either is obtaining an improved performance in terms of light diffusion. Suitable light diffusion is an unmet need in current illuminated vehicle components, which is required in order to obtain a uniform and aesthetically pleasing illumination across a logo, for example. Enhancing light diffusion has not so far been efficiently achieved beyond a specific LED arrangement within the vehicle component.

In summary, improvements in heat dissipation and light diffusion in vehicle components, whether they are illuminated or functional, involve solutions beyond those known so far, with which more reliable, visually appealing, and energy-efficient vehicle components can be achieved.

It is therefore an object of the present disclosure to provide an efficient vehicle component with which the above-mentioned needs found the in prior art are met without increasing complexity and costs.

### SUMMARY

A vehicle component for motor vehicles is provided herein. A vehicle component refers herein to aesthetic components such as badges, logos, emblems, etc., and also to any other functional component such as lighting, signaling, or sensor devices.

The vehicle component comprises a housing to be mounted arranged facing the interior of a vehicle.

The housing of the present vehicle component has a base and a side wall. An interior is defined by the base and the side wall of the housing.

The vehicle component further comprises an electrical element to be received within said interior of the housing. In one example, the electrical element may be or include a printed circuit board assembly. In use, at least one of a light source and a sensor may be connected to the printed circuit board assembly. The light output could be changed, e.g. light color, if required such as with dynamic patterns according to the light from the outside for example.

In use, a thermal adhesive may be provided between the base of the housing and the printed circuit board assembly. An efficient heat transfer is therefore ensured across interfaces.

In one particular example, at least a portion of an interior surface of the side wall of the housing may include a reflective surface. It may be advantageous that the printed circuit board assembly also includes a reflective surface. Preferably, said reflective surface of the printed circuit board assembly may be provided on a surface located away from the base of the housing or where the light source is disposed.

Said reflective surface may be white, for example, although any other reflective surface may be used extending to a portion or at least most of the housing interior surface and/or the printed circuit board assembly reflective surface. The light efficiency is thus increased, and light reflection is improved without costs being increased. The reflective surface may extend to at least most of the housing interior surface and/or the printed circuit board assembly reflective surface.

For means of clarity, a reflective surface means herein a surface that reflects more than 30% of the impinged light thereon. In addition, translucent refers herein to a material having ≥ 20% transparency to visible light, transparent refers herein to a material having >80% transparency to visible light, and opaque refers herein to a material having <20% transparency to visible light.

An optical element is also provided. The optical element is intended to be attached to the housing by laser welding.

Said optical element preferably comprises an outer layer to be arranged facing away from an exterior of the vehicle. The outer layer is also intended to be welded, preferably laser welded, to an edge of the side wall of the housing.

The outer layer is translucent. However, it is preferred that the outer layer is transparent.

The optical element may further comprise an inner diffusive layer. The inner diffusive layer is intended to be arranged between the outer layer and the base of the housing.

The optical element may comprise an intermediate layer. The intermediate layer may have a decorative item such as a logo. The intermediate layer is intended to be arranged between the above-mentioned outer layer and the inner diffusive layer of the optical element.

In a first example, the inner diffusive layer abuts against the side wall of the housing, in use.

The inner diffusive layer may be any suitable optical layer including any suitable coating with diffusing properties to evenly scatter light in order to enhance light diffusion without significantly reducing brightness.

As a result of providing such an inner diffusive layer, there is no need to provide a diffusive part as an additional part within the vehicle component, which is usually attached in the art through the use of screws.

In a second, preferred example, the inner diffusive layer of the optical element in the present vehicle component is directly attached to the outer layer, when in use.

In said second example, the optical element is made by applying the intermediate layer to the inner layer, and then applying the inner layer to the outer layer with the intermediate layer arranged there between, forming a single unit.

In said second example, a more compact, thinner vehicle component is obtained, with a reduced light divergence. Furthermore, the intermediate layer is efficiently protected externally by the presence of the outer layer and internally by the presence of the inner diffusive layer. This is particularly important in the case when the intermediate has a decorative item such as, for example, a logo.

In the above-mentioned first example, said inner diffusive layer, intermediate layer, and outer layer are arranged in the same way as the second example, but with the outer layer and the intermediate layer attached to one another forming a single unit, with a gap being possibly formed between the intermediate layer and the inner layer.

In use, an interface is preferably defined between the above-mentioned edge of the side wall of the housing and an edge of said outer layer of the optical element.

Said interface is advantageously inclined with respect to the base of the housing towards the optical element. More specifically, said interface is defined by a line parallel to said edge of the side wall of the housing such that, when extended, intersects the optical element. Said line parallel to the edge of the side wall is thus inclined with respect of a plane parallel to the base of the housing at an angle of inclination. Said angle of inclination of the interface to the base of the housing is 10-60°. An angle of inclination of the interface to the base of the housing of 20-40° is preferred. An optimal angle of inclination has been found to be 30°.

The inclination of the interface defined between the edge of the side wall of the housing and the edge of the outer layer of the optical element allows the optical element and the housing to be easily welded to each other from the exterior of the vehicle component. As a result, an efficient sealing is provided while tolerances are advantageously reduced. In addition, the welding process is facilitated since welding is carried out from and through the outer layer of the optical element. The welding between the outer layer and the housing is in this case almost undetectable from the outside, which is advantageous since the outer layer of the optical element is translucent and preferably transparent, as stated above.

It may be preferred that the intermediate layer includes at least one non-transparent portion arranged to define a decorative pattern.

According to the first example, the non-transparent portion preferably includes a translucent coating. According to the second, preferred example, said non-transparent portion preferably includes at least a diffusing coating made of at least one of Polycarbonate (PC), Acrylonitrile Butadiene Styrene (ABS), and Polymethyl Methacrylate (PMMA).

The non-transparent portion of the intermediate layer may comprise at least one of a translucent ink portion, a transparent ink portion, and a substantially opaque ink portion.

Within the meaning of the present disclosure, a translucent ink portion refers to any portion including ink allowing more than 50% of the light to pass through, while an opaque ink portion refers to any portion including ink allowing less than 50% of the light to pass through. Within the meaning of the present disclosure, a transparent ink portion refers to any portion including ink allowing substantially 90% or more of the light to pass through.

At least one of the above-mentioned outer layer, intermediate layer, and inner diffusive layer is configured as a film. A film is to be understood herein to be a layer that is 0.375-1.5 mm thick.

At least a portion of the base of the housing is preferably made from a thermally conductive material. At least a portion of the side wall of the housing is preferably made from a plastic material.

In one preferred example, at least one portion of the side wall of the housing is made from a plastic material for example at least one of Polycarbonate (PC), Acrylonitrile Butadiene Styrene (ABS), and Polymethyl Methacrylate (PMMA), while at least a portion of the base of the housing may be made from a plastic material with thermally conductive additives. That plastic material of at least one portion of the side wall of the housing could be the same as the plastic material of the at least one portion of the base of the housing, in which case the plastic material of the at least one portion of the base of the housing would additionally include suitable thermally conductive additives.

According to said preferred example, at least a portion of the base of the housing may be made by a double-injection molding process in which two different materials are processed into a single part.

As a result, a heatsink could be not be required, as opposed to prior art functional elements in which a heatsink should be provided in order to dissipate the heat generated, for example, by the printed circuit board assembly.

However, in some examples, a heatsink might be provided within the interior of the housing. If provided, the heatsink could be arranged in the base of the housing, adjacent the above-mentioned electrical element. The heat sink may be provided to increase the surface area available for heat exchange with the surrounding air.

In the latter case, at least a portion of the base of the housing might be made of metal.

For completeness, various aspects of the present invention are set out below in the following numbered clauses:
Clause 1: A vehicle component (100) comprising:
   - a housing (200) to be mounted arranged facing the interior of a vehicle, the housing (200) having a base (210) and a side wall (220) defining an interior (230); and
   - an electrical element (300) to be received within the interior (230) of the housing (200); and
   - an optical element (400) to be attached to the housing (200) by laser welding.
Clause 2: A vehicle component (100) comprising:
   - a housing (200) to be mounted arranged facing the interior of a vehicle, the housing (200) having a base (210) and a side wall (220) defining an interior (230); and
   - an electrical element (300) to be received within the interior (230) of the housing (200); and
   - an optical element (400) to be attached to the housing (200), the optical element (400) comprising an outer layer (410) to be arranged facing away from an exterior of the vehicle and to be laser welded to an edge (225) of the side wall (220) of the housing (200).
Clause 3: The vehicle component (100) of clause 2, wherein the optical element (400) comprises an inner diffusive layer (420) to be arranged between the outer layer (410) and the interior of the vehicle, and an intermediate layer (430) to be arranged between the outer layer (410) and the inner diffusive layer (420).
Clause 4: The vehicle component (100) of clause 3, wherein the inner diffusive layer (420) and the intermediate layer (430) are formed into a single inner layer.
Clause 5: The vehicle component (100) of clause 3 or 4, wherein at least the inner diffusive layer (420) is configured as a 0.375-1.5 mm thick film.
Clause 6: The vehicle component (100) of any of the clauses 3-5, wherein at least one of the outer layer (410), the intermediate layer (430), and the inner diffusive layer (420) is configured as a film
Clause 7: The vehicle component (100) of any of the clauses 3-6, wherein the intermediate layer (430) includes at least one non-transparent (435) portion arranged to define a decorative pattern.
Clause 8: The vehicle component (100) of clause 7, wherein the non-transparent portion (435) of the intermediate layer (430) includes at least a diffusing coating made of at least one of Polycarbonate (PC), Acrylonitrile Butadiene Styrene (ABS), and Polymethyl Methacrylate (PMMA).
Clause 9: The vehicle component (100) of clause 8, wherein the non-transparent portion (435) of the intermediate layer (430) comprises at least one of a translucent ink portion, a transparent ink portion, and a substantially opaque ink portion.
Clause 10: The vehicle component (100) of any of the clauses 2-8, wherein, in use, an interface (250) is defined between the edge (225) of the side wall (220) of the housing (200) and an edge (415) of the outer layer (410) of the optical element (400), and wherein said interface (250) is defined by a line parallel to the edge (225) of the side wall (220) of the housing (200) such that, when extended, intersects the optical element (400), said line being inclined with respect of a plane parallel to the base (210) of the housing (200) at an angle of inclination (α) of 10-60°, preferably 20-40°, with respect to the base (210) of the housing (200).
Clause 11: The vehicle component (100) of clause 10, wherein the interface (250) is inclined towards the optical element (400) at an angle of inclination (α) of 30°, with respect to the base (210) of the housing (200).
Clause 12: A vehicle component (100) comprising:
   - a housing (200) to be mounted arranged facing the interior of a vehicle, the housing (200) having a base (210) and a side wall (220) defining an interior (230); and
   - an electrical element (300) to be received within the interior (230) of the housing (200); and
   - an optical element (400) to be attached to the housing (200),
   wherein at least a portion of the base (210) of the housing (200) is made from a thermally conductive material, and the side wall (220) of the housing (200) is made from a plastic material.
Clause 13: The vehicle component (100) of clause 12, wherein the side wall (220) of the housing (200) is made from a plastic material, and at least a portion of the base (210) of the housing (200) is made from a plastic material with thermally conductive additives.
Clause 14: The vehicle component (100) of clause 13, wherein the plastic material of at least one portion of the side wall (220) of the housing (200) is the same as the plastic material of the at least one portion of the base (210) of the housing (200), in which case the plastic material of the at least one portion of the base (210) of the housing (200) includes suitable thermally conductive additives.
Clause 15: The vehicle component (100) of any of the clauses 12-14, wherein the plastic material is at least one of Polycarbonate (PC), Acrylonitrile Butadiene Styrene (ABS), and Polymethyl Methacrylate (PMMA).
Clause 16: The vehicle component (100) of any of the clauses 12-15, wherein said at least a portion of the base (210) of the housing (200) is made by a double-injection molding process.
Clause 17. The vehicle component (100) of clause 10, wherein at least a portion of the base (210) of the housing (200) is made of metal.
Clause 18. The vehicle component (100) of any preceding clause, wherein the electrical element (300) includes a printed circuit board assembly (310) to which at least one of a light source (320) and a sensor is connected.
Clause 19. The vehicle component (100) of clause 18, a thermal adhesive (500) is provided between the base (210) of the housing (200) and the printed circuit board assembly (310).
Clause 20. The vehicle component (100) of any preceding clause, wherein a heatsink (240) is provided within the interior (230) of the housing (200).
Clause 21. The vehicle component (100) of clause 20, wherein the heatsink (240) is provided in the base (210) of the housing (200), adjacent the electrical element (300).
Clause 22: The vehicle component (100) of any preceding clause, wherein at least a portion of an interior surface (226) of the side wall (220) of the housing (200) includes a reflective surface.

### BRIEF DESCRIPTION OF THE DRAWINGS

Non-limiting examples of the present disclosure will be described in the following, with reference to the appended drawings.

In the drawings:
Figure 1 is a sectional elevation view of a first example of the vehicle component;
Figure 2 is a sectional elevation view of the first example of the vehicle component in figure 1, with a close-up view of the interface between the housing side wall the optical element outer layer;
Figure 3 is a sectional elevation view of a second example of the vehicle component;
Figures 4a and 4b diagrammatically show the layer arrangement of the optical element according to the first example of the vehicle component; and
Figures 5a and 5b show the layer arrangement of the optical element according to the second example of the vehicle component.

### DETAILED DESCRIPTION OF EXAMPLES

In the non-limiting examples shown in the drawings, the present vehicle component has been denoted as a whole with reference numeral 100.

The vehicle component 100 may be an aesthetic component such as badge, a logo, an emblem, etc. or a functional component such as a lighting device, a signaling device, a sensor device, etc.

The vehicle component 100 comprises a housing 200. The housing 200 comprises a base 210 and a side wall 220. The base 210 and the side wall 220 of the housing 200 define an interior in which and electrical element 300, that will be described below, is received. In use, the housing 200 of the vehicle component 100 is arranged facing the interior of a vehicle (not shown in the drawings). The side wall 220 of the housing 200, or at least a portion thereof, is made from a plastic material. Examples of the plastic material from which the side wall 220 of the housing 200 is made is at least one of Polycarbonate (PC), Acrylonitrile Butadiene Styrene (ABS), and Polymethyl Methacrylate (PMMA).

In a preferred embodiment, the base 210 of the housing 200, or at least a portion thereof, is made from a thermally conductive material, such as plastic material with thermally conductive additives or even made from a metallic material.

In the manufacture of the housing 200 in said preferred embodiment, the housing 200 itself is preferably made by a double-injection molding process in which two different materials are processed.

At least a portion of the base 210 of the housing 200 is made of a material that is more thermally conductive than the material of at least a portion of the side wall 220 of the housing 200. With such specific configuration the use of a heatsink is less required for removing heat generated by the electrical element 300 during use within the interior of the housing 200.

The side wall 220 of the housing 200 includes an edge 225.

In the example shown, the electrical element 300 is or includes a printed circuit board assembly (PCBA) 310. A light source 320 such as a LED is electrically connected to the PCBA 310.

A thermal adhesive (500) is provided between the base 210 of the housing 200 and the PCBA 310. As a result, efficient heat transfer across interfaces is ensured. The PCBA 310 may include a reflective surface.

Preferably, at least a portion of an interior surface 226 of said side wall 220 of the housing 200 includes a reflective surface.

It is also preferred that at least a surface of the PCBA 310 further includes a reflective surface. In this case, the reflective surface of the PCBA 310 is arranged closer to the optical element 400 or further away from the base 210 of the housing 200.

The reflective surface of the interior surface 226 of said side wall 220 of the housing 200 and/or the reflective surface of the PCBA 310 may be white, for example, so that the light efficiency is increased, and light reflection is improved. The reflective surface may extend to at least most of the interior surface 226 of said side wall 220 of the housing 200 and/or an interior surface of the PCBA 310.

The vehicle component 100 further comprises an optical element 400. In use, the optical element 400 is attached to the housing 200 by laser welding.

The optical element 400 comprises an outer layer 410. In use, the outer layer 410 of the optical element 400 is arranged further away from the interior of the vehicle than the housing 200. Also in use, said outer layer 410 of the optical element 400 is laser welded to the edge 225 of the side wall 220 of the housing 200.

In the example being described, the optical element 400 further comprises an inner diffusive layer 420. As a result, light diffusion is enhanced without significantly reducing brightness and no additional part is required to be provided within the vehicle component 100 to act as a diffusive element. Said inner diffusive layer 420 may be any suitable optical layer including any suitable coating with diffusing properties to scatter light more evenly.

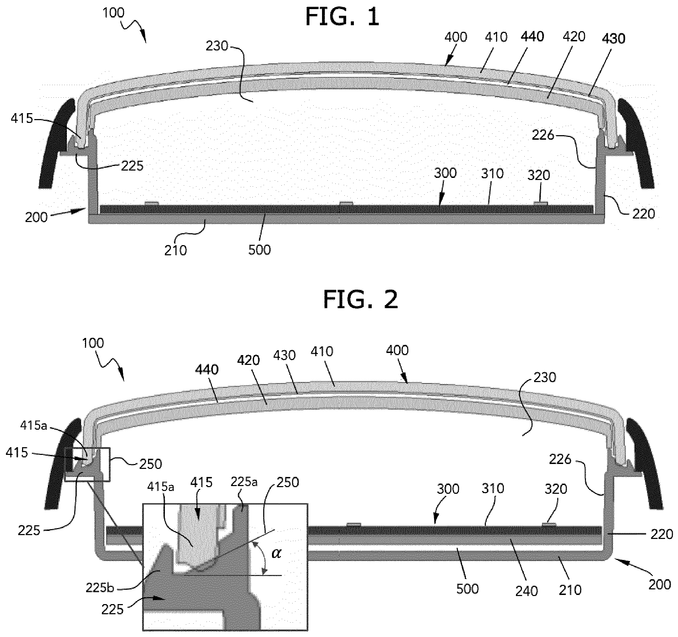

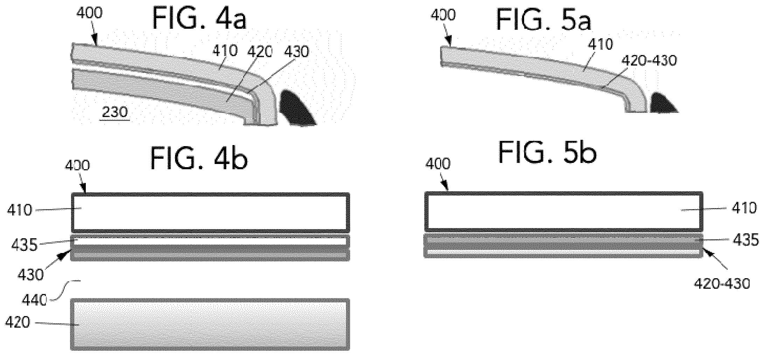

According to a first example shown in figures 1, 2, 4a, and 4b, the inner diffusive layer 420 abuts against the side wall 220 of the housing 200, in use. More specifically, the inner diffusive layer 420 is arranged between the outer layer 410 of the optical element 400 and the interior of the vehicle. In said first example, a gap 440 is formed between the intermediate layer 430 and the inner diffusive layer 420, as shown in figure 4b.

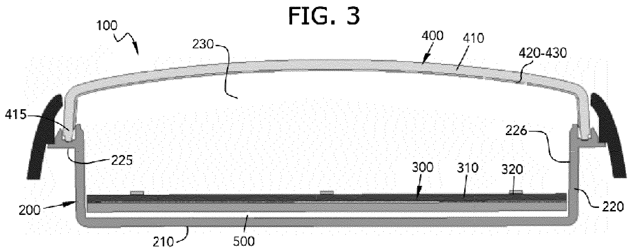

According to a second example shown in figures 3, 5a, and 5b, the inner diffusive layer 420 of the optical element 400 in the present vehicle component 100 is directly attached to the housing 200, when in use.

According to the second example, in the manufacture of the optical element 400, the intermediate layer 430 is applied to the inner diffusive layer 420, and the inner diffusive layer 420 is applied to the outer layer 410 with the intermediate layer 430 arranged there between, forming a single unit. This configuration results in a thinner, and thus a more compact, vehicle component 100, with a reduced light divergence.

In both examples being described and shown in the figures, the intermediate layer 430 includes at least one non-transparent portion 435 as shown in figures 4b and 5b of the drawings. Such non-transparent portion 435 is arranged to define a decorative pattern. The non-transparent portion 435 of the intermediate layer 430 may preferably include at least a diffusing coating. The diffusing coating may be made of at least one of Polycarbonate (PC), Acrylonitrile Butadiene Styrene (ABS), and Polymethyl Methacrylate (PMMA).

In the examples described herein, the non-transparent portion 435 of the intermediate layer 430 may comprise at least one of a translucent ink portion, a transparent ink portion, and a substantially opaque ink portion. The translucent ink portion may include, for example, white ink, while the substantially opaque ink portion may include, for example, an opaque ink such as black ink. Other different ink colors are not ruled out.

Within the meaning of the present disclosure, a translucent ink portion refers to any portion including ink having substantially ≥20% transparency to visible light, an opaque ink portion refers to any portion including ink having substantially <20% transparency to visible light, and a transparent ink portion refers to any portion including ink having substantially >80% transparency to visible light.

Still according to the second example, the outer layer 410 of the optical element 400 is attached to the housing 200 and the inner diffusive inner layer 420 is attached to the outer layer 410 or to the housing 200. The intermediate layer 430 may be attached to the inner diffusive inner layer 420.

According to the first example, the intermediate layer 430 may be attached to the outer layer 410.

In both examples, in use, the intermediate layer 430 is arranged between the outer layer 410 and the above mentioned inner diffusive layer 420.

In the second example shown in figures 3 and 5a, 5b of the drawings, the intermediate layer 430 is formed into a single inner layer with the inner diffusive layer 420.

According to the second example, said inner diffusive layer 420 is preferably a film, that is, a layer with a thickness of the order of 0.375-1.5 mm. The intermediate layer 430 and the inner diffusive layer 420 may be directly or indirectly attached to the outer layer 410 of the optical element 400.

In a specific, non-limiting example, at least one of the outer layer 410, the inner diffusive layer 420, and the intermediate layer 430 of the optical element 400 is/are configured as a film. As stated above, a film is to be understood herein to be a layer that is 0.375-1.5 mm thick regardless of the nature of the layer, i.e. regardless of its mechanical properties and the material from which it could be made.). Other configurations and thicknesses are envisaged depending on the particular requirements.

As shown in figure 2 of the drawings, an interface 250 is defined, in use, between the edge 225 of the side wall 220 of the housing 200 and an edge 415 of the outer layer 410 of the optical element 400. In the specific, non-limiting example shown in figure 2, an angle of inclination α is defined by a line parallel to that edge 225 of the side wall 220 of the housing 200 such that, when extended, intersects the optical element 400. Said line parallel to the edge 225 of the side wall 220 is inclined with respect of a plane parallel to the base 210 of the housing 200 at said angle of inclination α.

An optimal, preferred angle of inclination α, in this example, is 30°. This has been found to advantageously provide convenient access from the exterior for laser welding the optical element 400 to the housing 200 through the optical element 400.

As shown in figure 2, the edge 225 of the side wall 220 of the housing 200 includes a first portion 225a arranged closer to the interior of the housing 200. The first portion 225a of the edge 225 of the side wall 220 is configured so that the light always pass through the inner diffusive layer 420 before coming out of the vehicle component 100.

The edge 225 of the side wall 220 of the housing 200 further includes, as also shown in figure 2, a second portion 225b. The second portion 225b of the edge 225 of the side wall 220 is arranged closer to the exterior of the housing 200 which overlaps the outer layer 410 surrounding the edge 415 of the outer layer 410.

Referring also to figure 2, the edge 415 of the outer layer 410 of the optical element 400 includes a shaped portion 415a intended for attaching the vehicle component 100 to a specific part of a motor vehicle such as the bumper, the grille, etc.

Although a number of particular examples of a releasable vehicle component assembly for motor vehicles have been disclosed herein, other alternatives, modifications, uses and/or equivalents thereof are possible.

All possible combinations described herein are also covered.

For example, the particular configuration of the housing of thermally conductive material, made by a double-injection molding process, could be provided either in isolation or in combination with the housing having an optical element attached thereto with any means other than laser welding.

In the same way, the provision of an optical element with an inner diffusive layer is envisaged to be applied to a housing made of any type of material and process, with an optical element attached thereto with any means other than laser welding.

In addition, one or more of the particular arrangements of the interface and the housing internal reflective surface are also envisaged to be applied either in isolation or in combination with one or more of any of the above-mentioned additional examples.

Reference signs related to drawings are placed in parentheses in a claim are solely for attempting to increase the intelligibility of the claim and shall not be construed as limiting the scope of the claim.

## Claims

1. A vehicle component (100) comprising:
- a housing (200) to be mounted arranged facing the interior of the vehicle, the housing (200) having a base (210) and a side wall (220) defining an interior (230); and
- an electrical element (300) to be received within the interior (230) of the housing (200); and
- an optical element (400) to be attached to the housing (200) by laser welding.

2. The vehicle component (100) of claim 1, wherein the optical element (400) comprises an outer layer (410) to be arranged facing away from an exterior of the vehicle and to be welded to an edge (225) of the side wall (220) of the housing (200).

3. The vehicle component (100) of claim 2, wherein the optical element (400) further comprises an inner diffusive layer (420) to be arranged between the outer layer (410) and the interior of the vehicle, and an intermediate layer (430) to be arranged between the outer layer (410) and the inner diffusive layer (420).

4. The vehicle component (100) of claim 2 or claim 3, wherein, in use, an interface (250) is defined between the edge (225) of the side wall (220) of the housing (200) and an edge (415) of the outer layer (410) of the optical element (400), and wherein said interface (250) is defined by a line parallel to said edge (225) of the side wall (220) such that, when extended, intersects the optical element (400), said line parallel to the edge (225) of the side wall (220) being inclined with respect of a plane parallel to the base (210) of the housing (200) at an angle of inclination (α) of 10-60°, preferably 20-40°, with respect to the base (210) of the housing (200).

5. The vehicle component (100) of any of the claims 2-4, wherein the inner diffusive layer (420) and the intermediate layer (430) are formed into a single inner layer.

6. The vehicle component (100) of any of the claims 2-5, wherein the intermediate layer (430) includes at least one non-transparent portion (435) arranged to define a decorative pattern.

7. The vehicle component (100) of claim 6, wherein the non-transparent portion (435) includes at least a diffusing coating made of at least one of Polycarbonate (PC), Acrylonitrile Butadiene Styrene (ABS), and Polymethyl Methacrylate (PMMA), the non-transparent portion (435) comprising at least one of a translucent ink portion, a transparent ink portion, and a substantially opaque ink portion.

8. The vehicle component (100) of any of the claims 2-7, wherein at least one of the outer layer (410), the intermediate layer (430), and the inner diffusive layer (420) is configured as a film, and wherein at least the inner diffusive layer (420) is 0.375-1.5 mm thick.

9. The vehicle component (100) of any preceding claim, wherein at least a portion of the base (210) of the housing (200) is made from a thermally conductive material, and the side wall (220) of the housing (200) is made from a plastic material.

10. The vehicle component (100) of any preceding claim, wherein the side wall (220) of the housing (200) is made from a plastic material, and at least a portion of the base (210) of the housing (200) is made from the plastic material with thermally conductive additives.

11. The vehicle component (100) of claim 9 or 10, wherein the plastic material is at least one of Polycarbonate (PC), Acrylonitrile Butadiene Styrene (ABS), and Polymethyl Methacrylate (PMMA).

12. The vehicle component (100) of any of the preceding claims, wherein at least a portion of the base (210) of the housing (200) is made of metal.

13. The vehicle component (100) of any preceding claim, wherein the electrical element (300) includes a printed circuit board assembly (310) to which at least one of a light source (320) and a sensor is connected, preferably with a thermal adhesive (500) being provided between the base (210) of the housing (200) and the printed circuit board assembly (310).

14. The vehicle component (100) of any preceding claim, wherein a heatsink (240) is provided within the interior (230) of the housing (200), preferably in the base (210) of the housing (200), adjacent the electrical element (300).

15. The vehicle component (100) of any preceding claim, wherein at least a portion of an interior surface (226) of the side wall (220) of the housing (200) includes a reflective surface.
